# FASCICULE DE BREVET EUROPEEN

(11) **EP 1 100 693 B1**
(45) Date de publication et mention de la délivrance du brevet: **21.04.2004**
(21) Numéro de dépôt: 99929387.1
(22) Date de dépôt: 02.07.1999
(51) Int. Cl.: B60N 2/00

(54) **AGENCEMENT POUR LE REGLAGE EN POSITION LONGITUDINALE ET LA FIXATION D'UN ELEMENT D'AMENAGEMENT INTERIEUR DE VEHICULE AUTOMOBILE**
ANORDNUNG ZUR LÄNGSVERSTELLUNG UND HALTERUNG EINES INNENAUSBAU-ELEMENTS FÜR KRAFTFAHRZEUGE
ARRANGEMENT FOR ADJUSTING IN LONGITUDINAL POSITION AND FIXING A MOTOR VEHICLE INTERIOR EQUIPMENT ELEMENT

(30) Priorité: 31.07.1998 FR 9809850
(43) Date de publication de la demande: 23.05.2001
(73) Titulaire: Renault s.a.s., 92100 Boulogne Billancourt (FR)
(72) Inventeur: BAERD, Sébastien, F-75015 Paris (FR); PETIT, Gérard, F-78290 Croissy sur Seine (FR); VELAY, Michel, F-78640 Saint Germain de la Grange (FR)
(86) Numéro de dépôt international: PCT/FR1999/001602
(87) Numéro de publication internationale: WO 2000/007840

(56) Documents cités:
- EP-A- 0 094 438
- EP-A- 0 622 266
- WO-A-97/43141
- FR-A- 2 762 814
- US-A- 5 158 338
- US-A- 5 236 153
- US-A- 5 368 355
- US-A- 5 474 311
- US-A- 5 711 505

## Description

L'invention concerne un agencement du réglage de la position longitudinale, et de la fixation en position réglée, d'un sous-ensemble, notamment d'un siège de véhicule automobile.

L'invention concerne plus particulièrement un agencement du réglage de la position longitudinale, et de la fixation en position réglée, d'un sous-ensemble, notamment d'un siège, d'un coffre, ou d'un élément d'aménagement intérieur, sur le plancher horizontal de l'habitacle d'un véhicule automobile équipé de deux glissières parallèles qui reçoivent en déplacement longitudinal un mécanisme comportant des organes de guidage des déplacements longitudinaux du sous-ensemble et au moins un organe de verrouillage en position réglée du sous-ensemble (voir, par exemple, EP-A-0 615 879).

Ce type d'agencement est en particulier destiné à faciliter l'aménagement de l'intérieur d'un véhicule automobile du type "monospace", qui doit présenter de grandes possibilités d'aménagement, et notamment une grande modularité tant quant au nombre de sièges ou de sous-ensembles démontables agencés dans l'habitacle, qu'au nombre de positions que ces sous-ensembles sont susceptibles d'occuper.

Selon une première conception connue, il a déjà été proposer d'aménager des séries de points d'accrochage sur le plancher du véhicule dont chacune, comportant de préférence quatre points d'accrochage pour les quatre pieds du siège ou du sous-ensemble, détermine une position de montage et de fixation.

Afin d'accroître la modularité de l'aménagement de l'habitacle, il a déjà été proposé un agencement qui est par exemple décrit et représenté dans ledit document EP-A-0.615.879, dans lequel le plancher horizontal de l'habitacle est équipé d'au moins deux rails ou glissières parallèles qui reçoivent en coulissement longitudinal des organes de guidage en forme de coulisseaux, aussi appelés navettes, qui guident des déplacements longitudinaux du siège et qui permettent d'assurer un verrouillage en position longitudinale réglée du siège, ce dernier comportant des pieds d'orientation sensiblement verticale dont les extrémités inférieures comportant des moyens d'accrochage, de conception connue, du siège sur les coulisseaux ou navettes.

Cette solution permet d'accroître la modularité et permet aussi de régler la position longitudinale d'un siège, en conservant son orientation et son accrochage, en déplaçant les coulisseaux.

Toutefois, cette conception fait appel à autant de paires de coulisseaux-navettes que l'on désire monter de sièges et, si on ne souhaite pas que les coulisseaux soient apparents dans l'habitacle, ils doivent être agencés dans le fond de glissières noyées dans le plancher, ce qui rend difficile l'accrochage d'un siège sur les faces supérieures des coulisseaux dans la mesure où celles-ci ne sont pas apparentes et sont masquées par des moyens, en forme de brosse, d'obturation partielle de la fente longitudinale médiane de la glissière en forme de rail. Le document US-A-5368355 décrit un siège qui comporte des roues permettant son déplacement dans des rails parallèles.

L'invention a pour but de proposer une nouvelle conception d'un agencement de réglage du type mentionné précédemment qui permet de remédier à ces inconvénients, et qui présente notamment un organe porteur du sous-ensemble, comportant des organes de guidage et au moins un organe de verrouillage, qui puisse être démonté au gré des besoins des utilisateurs du véhicule.

Dans ce but, l'invention (telle que définie dans la revendication indépendante) propose un agencement du type précédemment décrit, caractérisé en ce que les organes de guidage comportent des roues permettant de déplacer le sous-ensemble (quand il n'est pas reçu dans les glissières), et en ce que l'organe de verrouillage est porté par le sous-ensemble et est susceptible de s'étendre entre :
- un état extrême contracté dans lequel son encombrement transversal permet l'introduction verticale du mécanisme dans les glissières à travers une fente longitudinale médiane de ces dernières, et le déplacement longitudinal du mécanisme dans les glissières,
- et un état extrême expansé dans lequel il s'étend transversalement par rapport aux glissières, pour immobiliser verticalement le sous-ensemble par rapport aux glissières dans la série de positions déterminées, et dans lequel il coopère avec des portions de surfaces latérales en vis-à-vis d'au moins une des glissières pour immobiliser longitudinalement le sous-ensemble par rapport aux glissières dans ces positions déterminées.

Selon d'autres caractéristiques de l'invention :
- l'organe de verrouillage est un peigne, qui est articulé autour d'un axe longitudinal porté par le sous-ensemble, et qui comporte :
   . une partie basse sur laquelle sont agencées des dents transversales qui sont susceptibles de coopérer, dans l'état expansé, avec les portions de surfaces latérales d'au moins une des glissières, le peigne étant, pour chaque position déterminée des roues, en regard d'une portion de surface latérale associée à la position déterminée considérée, et
   . une partie haute, qui comporte l'axe d'articulation du peigne ;
- le sous-ensemble comporte un support en forme de plaque d'une dimension transversale au moins égale à l'écartement des glissières, qui comporte sous sa face inférieure quatre pieds verticaux porteurs des roues, et des pattes portant les axes d'articulation des peignes ;
- les peignes comportent des parties hautes sur lesquelles sont agencés des leviers de commande sensiblement verticaux, et la face inférieure du support comporte un bras de commande sensiblement longitudinal et horizontal, dont l'axe vertical d'articulation est monté à rotation sur le support et comporte une came, solidaire de l'axe, qui est susceptible d'actionner transversalement une tringlerie qui est reliée à une extrémité supérieure des leviers pour commander la rotation des peignes autour de leurs axes d'articulation, les leviers étant rappelés élastiquement dans une position correspondant à la position expansée des peignes ;
- les peignes comportent dans leurs parties basses des surfaces permettant l'appui de cames excentrées qui sont montées à rotation autour d'axes longitudinaux et qui sont susceptibles de commander la rotation des peignes autour de leurs axes d'articulation, les peignes étant rappelés élastiquement en position contractée ;
- le support reçoit en articulation deux peignes agencés en position médiane latérale de part et d'autre de sa face inférieure ;
- le support reçoit en articulation quatre peignes agencés deux à deux latéralement de part et d'autre de sa face inférieure ;
- au moins une glissière comporte une série d'encoches complémentaires des roues dans lesquelles les roues sont susceptibles d'être reçues pour obtenir la série de positions déterminées ;
- les encoches sont réalisées venues de matière avec les glissières ;
- les encoches sont portées par des barres qui sont rapportées au fond des glissières ;
- au moins une glissière comporte une crémaillère latérale interne pour obtenir les portions de surfaces latérales internes qui réalisent l'immobilisation verticale des pieds, et pour obtenir la série de positions déterminées qui réalise l'immobilisation longitudinale des pieds ;
- les pieds verticaux du support reçoivent en articulation les peignes, desquels sont solidaires les roues, les roues étant rappelées élastiquement avec les peignes selon une position verticale dépassant des pieds lorsque les peignes sont en position contractée, des patins à faible coefficient de frottement portés par les pieds étant susceptibles de prendre appui sur les glissières pour permettre les déplacements longitudinaux du support quand il coulisse dans les glissières, et les roues étant susceptibles d'occuper une portion inclinée lorsque les peignes sont amenés en position expansée et que leurs dents coopèrent avec la crémaillère, les patins à faible coefficient de frottement prenant appui sur les glissières ;
- les glissières sont montées dans le plancher du véhicule, à la surface duquel elles affleurent ;
- les glissières sont rapportées dans des gouttières de forme complémentaire appartenant au plancher du véhicule et comportent des ailes longitudinales supérieures qui s'étendent transversalement vers l'extérieur des glissières au dessus du plancher du véhicule pour y coincer une moquette du véhicule;
- le support comporte des crochets qui reçoivent des points d'ancrage de l'élément d'aménagement intérieur.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective qui illustre un premier mode de réalisation du sous-ensemble selon l'invention, associé à deux glissières parallèles pour le réglage de la position longitudinale et la fixation du sous-ensemble à l'aide de deux organes de verrouillage et de glissières en une partie ;
- la figure 2 est une vue en bout, partiellement en section transversale, sur laquelle la partie inférieure d'un pied est illustrée en association avec une glissière, et sur laquelle le mécanisme expansible du pied est illustré en position d'engagement, de dégagement, ou de réglage longitudinal dans la glissière ;
- la figure 3 est une vue selon la figure 2 dans laquelle le mécanisme expansible du pied est illustré en position de verrouillage ;
- la figure 4 est une vue schématique en perspective qui illustre un deuxième mode de réalisation du sous-ensemble selon l'invention comportant quatre organes de verrouillage et des glissières en deux parties ;
- la figure 5 est une vue schématique en perspective qui illustre un troisième mode de réalisation en variante du sous-ensemble selon l'invention comportant quatre organes de verrouillage inclus dans les pieds et des glissières en deux parties ;
- la figure 6 est une vue en bout, partiellement en section transversale, dans laquelle le mécanisme expansible du pied selon la figure 5 est illustré en position d'engagement, de dégagement, ou de réglage longitudinal dans la glissière ; et
- la figure 7 est une vue selon la figure 6 dans laquelle le mécanisme expansible du pied est illustré en position de verrouillage.

Dans la description qui va suivre, des chiffres de référence identiques désignent des pièces identiques ou ayant des fonctions similaires.

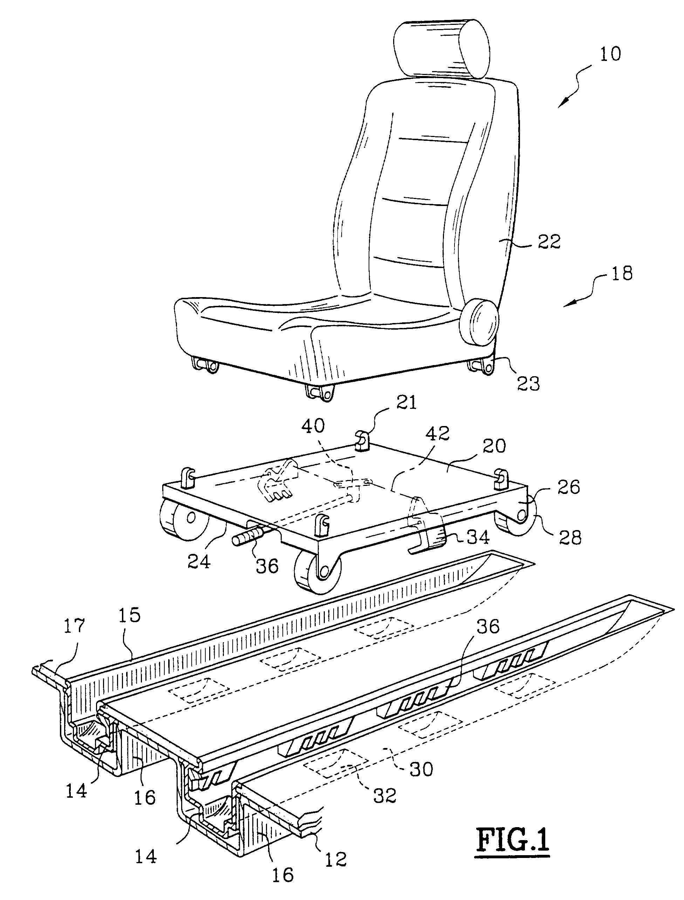

On voit sur la figure 1 un premier mode de réalisation d'un agencement 10 pour un sous-ensemble 18, réalisé conformément à l'invention.

De manière connue, un plancher 12 de véhicule automobile de type "monospace" (non représenté) est équipé d'au moins deux glissières rapportées 14 parallèles. Dans le mode de réalisation préféré de l'invention, le plancher est réalisé par emboutissage d'une tôle métallique de manière à former deux gouttières 16 longitudinales de grande longueur qui présentent dans une direction transversale un profil sensiblement en forme de U, et qui reçoivent les glissières rapportées 14.

Avantageusement, les glissières rapportées 14 sont fixées dans les gouttières 16 par vissage ou par un autre moyen de fixation, et affleurent légèrement au dessus du niveau du plancher 12.

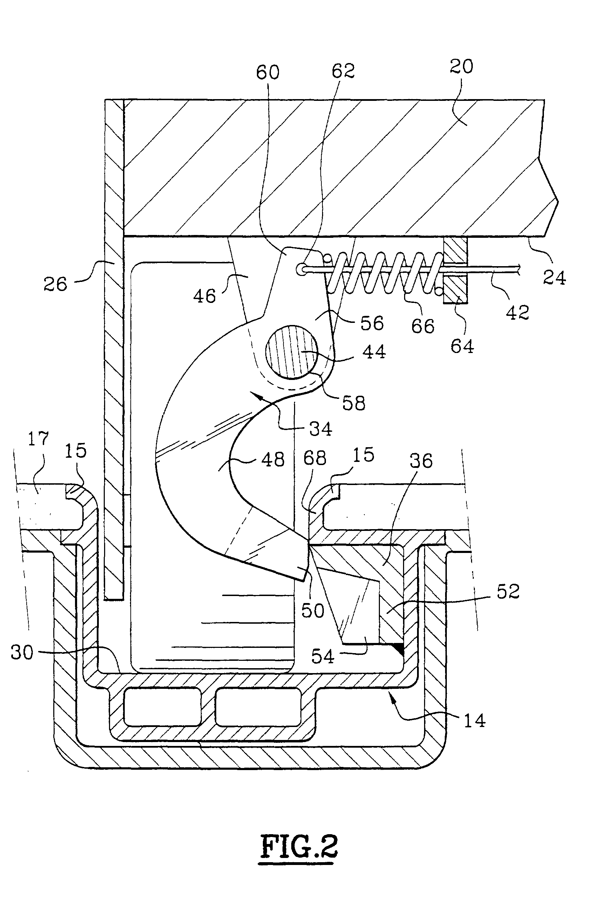

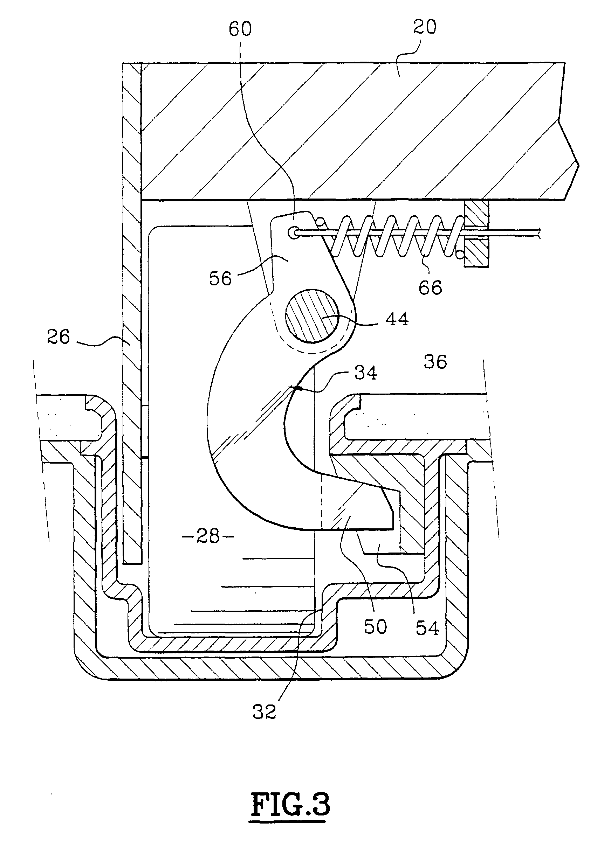

Ainsi, les glissières rapportées 14 comportent dans leur partie supérieure des ailes longitudinales 15, visibles aussi aux figures 2 et 3, qui s'étendent transversalement de part et d'autre des glissières 14, et légèrement au dessus du plancher 12 du véhicule, de façon à permettre l'immobilisation d'une moquette 17 du véhicule par coincement. Lors de l'assemblage du véhicule en usine, la moquette est posée préalablement au montage des glissières.

Conformément à l'invention, les glissières longitudinales parallèles 14 sont susceptibles de recevoir le sous-ensemble 18, qui est constitué d'un support 20 sur lequel peut être monté un élément d'aménagement intérieur 22 tel qu'un coffre, un support de vélo ou de planche à voile, ou encore un siège, comme représenté à la figure 1.

Avantageusement, le siège 22 peut être fixé au support 20 par un moyen de fixation 21, représenté à la figure 1 sous la forme de crochets susceptibles des plots d'ancrage 23 solidaires du siège 22.

Dans le premier mode de réalisation de l'invention, le support 20 est une plaque plane de dimension transversale, au moins égale à l'écartement des glissières 14, et qui comporte sous sa face inférieure 24 quatre pieds verticaux 26, qui portent des roues 28 montées à rotation autour d'axes transversaux. Avantageusement, lorsque le sous-ensemble 18 n'est pas reçu dans les glissières 14, les roues 28 permettent de déplacer le sous-ensemble 18 sur le plancher 12 du véhicule, ou en dehors du véhicule sur le sol.

La voie ou écartement transversal des roues 28 correspond à l'écartement transversal des glissières 14 pour que les roues 28 puissent être reçues dans les glissières 14 afin de permettre le déplacement longitudinal du support 20 longitudinalement dans les glissières 14. Les glissières 14 comportent un fond horizontal 30, qui comporte des encoches 32 en forme de portions de cylindres d'axes transversaux, disposées longitudinalement à intervalles réguliers, et qui sont susceptibles de recevoir les roues 28 suivant une série de positions longitudinales déterminées.

Le sous-ensemble 18 est susceptible d'être verrouillé longitudinalement dans la série de positions déterminées définies par les encoches 32 à l'aide de moyens de verrouillage portés par le support 20 et par la glissière 14.

Le support 20 en forme de plaque comporte ainsi deux peignes 34 qui, dans le premier mode de réalisation de l'invention représenté à la figure 1, sont agencés en position médiane latérale de part et d'autre de la face inférieure 24 du support 20. Les peignes 34 sont destinés à coopérer avec des portions de surface latérale 36, qui sont représentées à la figure 1 sous la forme de tronçons de crémaillère 36. Lorsque les peignes s'étendent transversalement suivant un état extrême expansé vers l'intérieur de la paire de glissières 14, ceux-ci réalisent l'immobilisation du support 20 par rapport au plancher 12 du véhicule, comme il sera décrit ultérieurement en référence aux figures 2 et 3.

Avantageusement, le support 20 comporte un bras de commande 38 qui est monté verticalement à rotation sur la face inférieure 24 du support 20, et est solidaire d'une came 40 qui est destinée à l'actionnement d'une tringlerie 42 commandant les peignes 34.

Les figures 2 et 3 illustrent plus précisément le détail de l'actionnement des peignes 34 pour le verrouillage du support 20.

Chaque peigne 34 est articulé en rotation autour d'un axe longitudinal 44 qui est porté par au moins une patte verticale 46 solidaire de la face inférieure 24 du support 20. Chaque peigne 34 comporte une partie basse 48 en forme de crochet, dont des dents transversales 50 sont destinées à coopérer avec les tronçons de crémaillère 36 agencés à l'intérieur de la glissière 14. De manière avantageuse, en vue de réduire les coûts de fabrication de la glissière 14, les tronçons de crémaillère 36 sont réalisés sous la forme de tronçons de crémaillère rapportés, qui sont fixés sur une paroi latérale verticale intérieure 52 de la crémaillère 14, par exemple par soudage comme représenté à la figure 2, ou par vissage. Chaque dent transversale 50 d'un peigne 34 est tournée vers l'intérieur de la paire de glissières 14 et est reçue entre deux dents transversales 54 du tronçon de crémaillère 36, qui s'étendent transversalement dans la direction opposée.

Chaque peigne 34 comporte une partie haute 56, qui comporte un alésage longitudinal 58 recevant l'axe d'articulation 44 du peigne 34, et qui comporte un levier 60, percé à son extrémité supérieure d'un trou 62, pour y accrocher la tringlerie 42 précédemment décrite.

Par ailleurs, une patte d'appui 64 est solidaire de la face inférieure 24 du support 20 et est traversée par la tringlerie 42. Cette patte d'appui 64 fournit une surface d'appui à un ressort de rappel 66, qui est agencé entre la patte d'appui et le levier 60 du peigne 34, pour rappeler élastiquement le peigne 34 vers son état extrême expansé, qui sera décrit ultérieurement en référence à la figure 3, et dans lequel il s'étend transversalement vers les tronçons de crémaillère 36.

Comme représenté à la figure 2, la roue 28 du support 20 prend appui sur le fond 30 de la glissière 14 entre deux encoches 32 de sorte que la patte 26 du support 20 occupe une position haute dans la glissière 14 et que la partie basse 48 du peigne 34 est en appui contre une aile supérieure intérieure 68 de la glissière 14, qui est agencée au dessus des dents 54 des tronçons de crémaillère 36, et en dessous des ailes 15 précédemment décrites. De la sorte, le peigne 34 est maintenu dans son état extrême contracté, ce qui permet son extraction verticale de la glissière 14 ou le déplacement longitudinal du support 20 dans les glissières 14.

La figure 3 illustre un état extrême expansé des peignes 34 lorsque les quatre roues 28 du support 20 descendent dans quatre encoches 32 associées de la glissière 14. Le support 20 et ses pieds 26 descend alors d'une hauteur correspondante, ce qui permet de décaler chaque peigne 34 vers le bas d'une hauteur correspondante pour amener les dents 50 en regard des dents 54 des tronçons de crémaillère 36. De la sorte, chaque peigne 34, en pivotant autour de son axe de rotation 44, s'enclenche dans les tronçons de crémaillère 36 sous l'action de l'effort de rappel exercé par le ressort de rappel 66 sur le levier 60 agencé à la partie haute 56 du peigne 34. Le support 20 du sous-ensemble 18 est alors verrouillé dans les glissières 14.

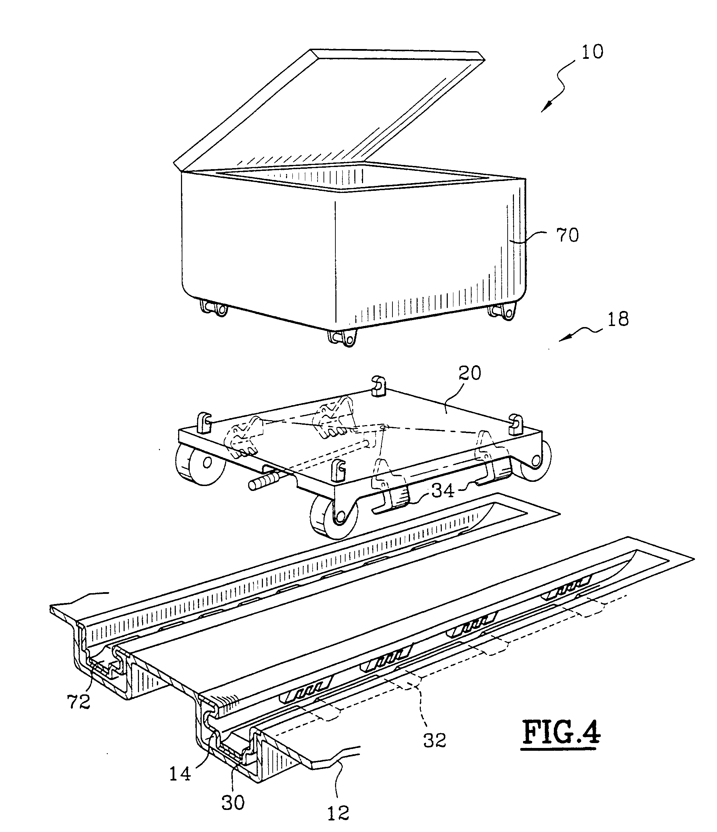

La figure 4 illustre un second mode de réalisation de l'invention dans lequel le support 20 comporte quatre peignes 34 portés par les support 20 qui permet les déplacements longitudinaux et le verrouillage du sous-ensemble 18 dans les glissières 14 du plancher 12.

Dans ce mode de réalisation, le sous-ensemble 18 comporte un élément d'aménagement intérieur qui est un coffre 70 permettant le rangement de divers objets à l'intérieur de l'habitacle du véhicule.

Avantageusement et de façon non restrictive de l'invention, l'élément d'aménagement intérieur peut aussi être un support de bicyclette, une tablette, un brancard, ou tout autre élément susceptible de prendre place à l'intérieur d'un véhicule automobile de type "monospace".

Le verrouillage du support 20 dans les glissières 14 est analogue à celui décrit précédemment en référence aux figures 1 à 3, et ne fera pas l'objet d'une description particulière.

Dans ce mode de réalisation, les glissières 14 sont réalisées sous forme de profilés pouvant être obtenus par exemple par étirage, et leur fond horizontal 30 comporte des barres 72 rapportées, qui portent sur le dessus les profils en creux 32 destinés à permettre l'immobilisation longitudinale du support 20 suivant la série de positions déterminées. Avantageusement, les barres 72 sont réalisées par un procédé de déformation plastique, tel que forgeage ou matriçage, et sont fixées au fond 30 des glissières 14 par vissage ou par soudage.

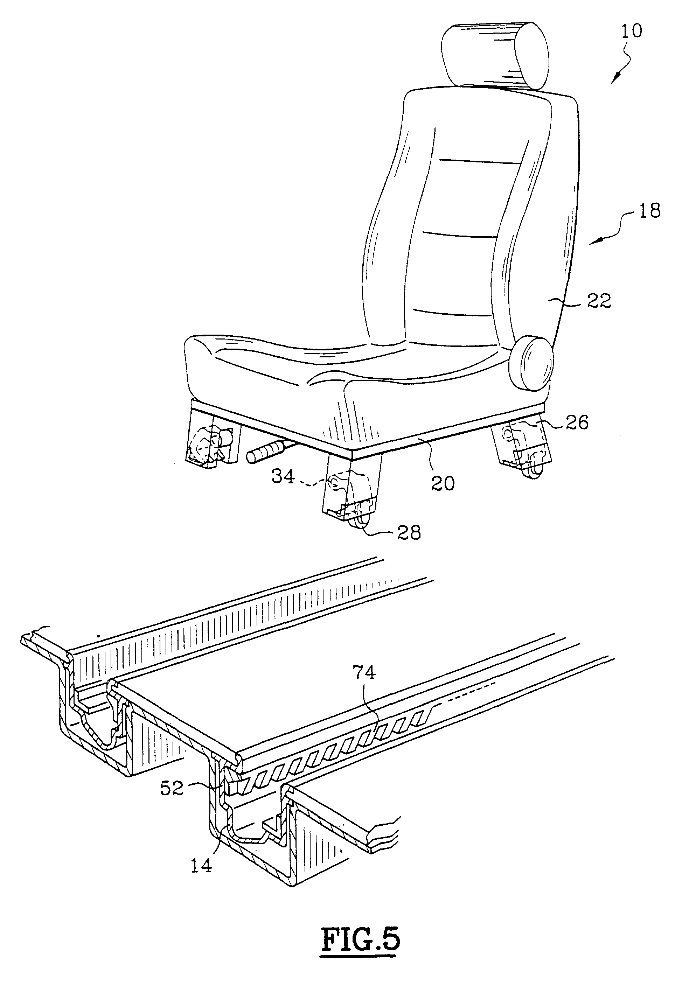

La figure 5 illustre un troisième mode de réalisation en variante de l'invention dans lequel les roues 28 sont agencées à l'extrémité des parties basses des peignes 34, les peignes 34 étant portés par les pieds 26.

Le siège 22 comporte aussi des moyens d'accrochage au support 20 sur lequel il est représenté ici assemblé, et comporte quatre pieds creux 26 à l'intérieur desquels sont agencés les peignes 34. La position extrême contractée des peignes 34 est liée à une position d'utilisation des roulettes 28 dans laquelle les roulettes 28 dépassent en dessous des pieds 26 pour permettre au sous-ensemble 18 d'être déplacé, par exemple sur le plancher du véhicule ou sur le sol à l'extérieur du véhicule.

La position extrême contractée des peignes 34 permet par conséquent l'introduction des pieds 26 dans les glissières 14.

Toutefois, dans cette configuration, les roulettes 28 ne participent pas au déplacement du sous-ensemble 18 dans la série de positions déterminées. En effet, une crémaillère 74, agencée sur les parois latérales verticales intérieures 52 crémaillères 14, est susceptible de réaliser simultanément la mise en position du sous-ensemble 18 dans la série de positions déterminées et son verrouillage en coopération avec les peignes 34.

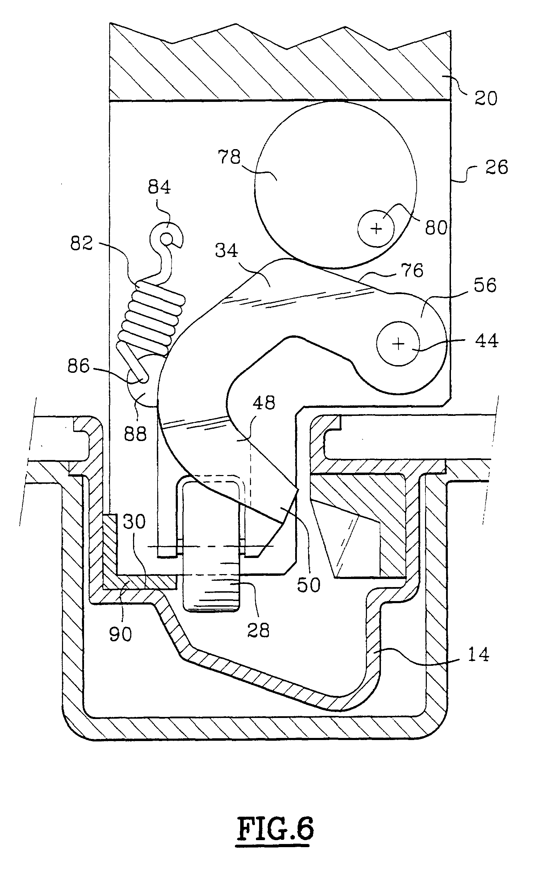

Cette particularité de ce troisième mode de réalisation en variante est représentée à la figure 6, qui illustre la configuration d'un pied 26 dans un état extrême contracté du peigne 34 associé, correspondant à une position de coulissement longitudinal et/ou d'extraction verticale du pied 26.

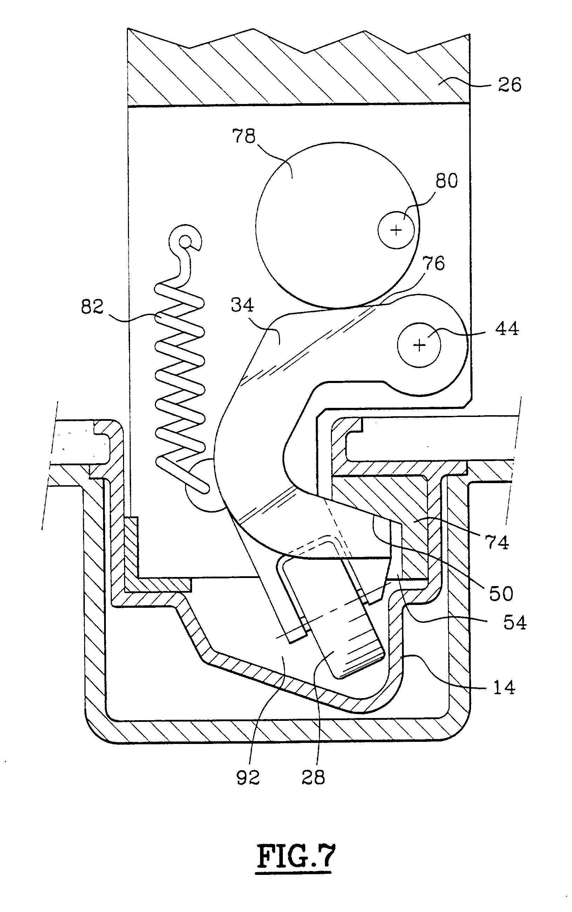

D'une façon analogue au mécanisme décrit en référence aux figures 1 à 4, chaque peigne 34 est articulé autour de son axe de rotation 44 agencé dans sa partie haute 56, l'axe 44 étant porté directement par le pied 26 du support 20. La partie haute 56 de chaque peigne 34, située à proximité immédiate du palier de l'axe 44, comporte une surface d'appui 76 destinée à coopérer avec une came excentrée 78 du pied 26, de forme sensiblement cylindrique, et qui est montée excentrée à rotation autour d'un axe longitudinal 80 porté par le pied 26. La rotation de la came excentrée 78 est susceptible, par l'intermédiaire de la surface d'appui 76, de provoquer le basculement du peigne 34 de sa position extrême contractée à sa position extrême expansée dans laquelle, comme on peut le voir en référence à la figure 7, ses dents 50 coopèrent avec la crémaillère 74 portée par la glissière 14.

Avantageusement, dans ce mode de réalisation, et à la différence des précédents, les peignes 34 sont rappelés élastiquement dans leur position extrême contractée par un ressort de rappel 82, afin de permettre aux roues 28 de dépasser en dessous du pied 26 dès que le sous-ensemble 18 est extrait des glissières 14. A cet effet, le ressort de rappel 82 comporte une première extrémité 84 qui est liée au pied 26, et une deuxième extrémité 86 qui est liée à une patte transversale 88, solidaire du peigne 34.

Dans ce mode de réalisation, la partie basse 48 du peigne 34 porte la roue 28 qui permet le déplacement du sous-ensemble 18 sur le plancher du véhicule ou sur le sol à l'extérieur du véhicule, mais qui ne participe pas à la mise en position du sous-ensemble 18 dans la série de positions déterminées. En effet, le pied 26 comporte un patin en matériau à faible coefficient de frottement 90 qui prend appui sur le fond 30 de la glissière 14 pour permettre le coulissement longitudinal du sous-ensemble 18 par rapport aux glissières 14.

La position de verrouillage du pied 26 est représentée à la figure 7. Dans cette configuration, la came 78 a tourné autour de son axe 80 en prenant appui sur la surface d'appui 76, et le peigne 34 a de ce fait pivoté autour de son axe 44 de façon à ce que les dents 50 soient reçues entre deux dents 54 de la crémaillère 74. Avantageusement, la glissière 14 présente un profil qui comporte un dégagement 92 destiné à autoriser le passage de la roue 28 lorsque le peigne 34 est amené en position expansée. Ce dégagement 92 évite que la roue 28 ne gêne le verrouillage du peigne 34.

Les moyens de commande et de maintien en position de la came 78 ne sont pas représentés mais peuvent par exemple comporter une tringlerie verrouillable, qui permet d'amener et de maintenir la came 78 en appui contre la surface d'appui 76, à l'encontre de l'effort de rappel exercé par le ressort 82 du pied 26.

Avantageusement, cet agencement 10 permet le réglage de la position longitudinale et la fixation en position réglée du sous-ensemble 18 à l'aide mécanismes simples, fiables et aisément manipulables, qui permettent une grande latitude de manoeuvre, tant dans les glissières 14 du véhicule qu'en dehors de celles-ci.

## Revendications

1. Agencement (10) du règlage de la position longitudinale, et de la fixation en position réglée, d'un sous-ensemble (18), notamment d'un siège (22), d'un coffre (70), ou d'un élément d'aménagement intérieur, sur le plancher (12) horizontal de l'habitacle d'un véhicule automobile équipé de deux glissières parallèles (14) qui reçoivent en déplacement longitudinal un mécanisme comportant des organes de guidage des déplacements longitudinaux du sous-ensemble et au moins un organe de verrouillage en position réglée du sous-ensemble, **caractérisé en ce que** les organes de guidage comportent des roues (28) permettant de déplacer le sous-ensemble (18) et **en ce que** l'organe de verrouillage porté par le sous-ensemble (18) est formé par un peigne (34) qui est articulé autour d'un axe longitudinal (44), et est susceptible de s'étendre entre :
- un état extrême contracté dans lequel son encombrement transversal permet l'introduction verticale du mécanisme dans les glissières (14) à travers une fente longitudinale médiane de ces dernières, et le déplacement longitudinal du mécanisme dans les glissières,
- et un état extrême expansé dans lequel il s'étend transversalement par rapport aux glissières (14), pour immobiliser verticalement le sous-ensemble (18) par rapport aux glissières (14) dans la série de positions déterminées, et dans lequel il coopère avec des portions de surfaces latérales en vis-à-vis d'au moins une des glissières pour immobiliser longitudinalement le sous-ensemble (18) par rapport aux glissières (14) dans ces positions déterminées.

2. Agencement (10) selon la revendication 1, **caractérisé en ce que** le peigne (34), qui est articulé autour de l'axe longitudinal (44) porté par le sous-ensemble (18) comporte :
- une partie basse (48) sur laquelle sont agencées des dents transversales (50) qui sont susceptibles de coopérer, dans l'état expansé, avec les portions de surfaces latérales d'au moins une des glissières (14), le peigne (34) étant, pour chaque position déterminée des roues (28), en regard d'une portion de surface latérale associée à la position déterminée considérée, et
- une partie haute(56), qui comporte l'axe d'articulation (44) du peigne (34).

3. Agencement (10) selon la revendication 2, **caractérisé en ce que** le sous-ensemble (18) comporte un support (20) en forme de plaque d'une dimension transversale au moins égale à l'écartement des glissières (14), qui comporte sous sa face inférieure (24) quatre pieds verticaux (26) porteurs des roues (28), et des pattes (46) portant les axes d'articulation (44) des peignes (34).

4. Agencement (10) selon l'une quelconque des revendication 2 ou 3, **caractérisé en ce que** les peignes (34) comportent des parties hautes (56) sur lesquelles sont agencés des leviers (60) de commande sensiblement verticaux, et **en ce que** la face inférieure (24) du support comporte un bras de commande (36) sensiblement longitudinal et horizontal, dont l'axe vertical d'articulation est monté à rotation sur le support (20) et comporte une came (40), solidaire de l'axe, qui est susceptible d'actionner transversalement une tringlerie (42) qui est reliée à une extrémité supérieure des leviers (60) pour commander la rotation des peignes (34) autour de leurs axes d'articulation (44), les leviers (60) étant rappelés élastiquement dans une position correspondant à la position expansée des peignes (34).

5. Agencement (10) selon l'une quelconque des revendication 2 ou 3, **caractérisé en ce que** les peignes (34) comportent dans leurs parties basses (48) des surfaces (76) permettant l'appui de cames excentrées (78) qui sont montées à rotation autour d'axes longitudinaux (80) et qui sont susceptibles de commander la rotation des peignes (34) autour de leurs axes d'articulation (44), les peignes (34) étant rappelés élastiquement en position contractée.

6. Agencement (10) selon l'une quelconque des revendications 2 à 5, **caractérisé en ce que** le support (20) reçoit en articulation deux peignes (34) agencés en position médiane latérale de part et d'autre de sa face inférieure (24).

7. Agencement (10) selon l'une quelconque des revendications 2 à 5, **caractérisé en ce que** le support (20) reçoit en articulation quatre peignes (34) agencés deux à deux latéralement de part et d'autre de sa face inférieure (24).

8. Agencement (10) selon l'une quelconque des revendications précédentes, **caractérisé en ce que** au moins une glissière (14) comporte une série d'encoches (32) complémentaires des roues (28) dans lesquelles les roues (28) sont susceptibles d'être reçues pour obtenir la série de positions déterminées.

9. Agencement (10) selon la revendication 8, **caractérisé en ce que** les encoches (32) sont réalisées venues de matière avec les glissières (14).

10. Agencement (10) selon la revendication 8, **caractérisé en ce que** les encoches (32) sont portées par des barres (72) qui sont rapportées au fond des glissières (14).

11. Agencement (10) selon l'une quelconque des revendications 1 à 7, **caractérisé en ce que** au moins une glissière (14) comporte une crémaillère latérale interne (74) pour obtenir les portions de surfaces latérales internes qui réalisent l'immobilisation verticale des pieds (26), et pour obtenir la série de positions déterminées qui réalise l'immobilisation longitudinale des pieds (26).

12. Agencement (10) selon la revendication 11 prise en combinaison avec la revendication 5, **caractérisé en ce que** les pieds (26) verticaux du support (20) reçoivent en articulation les peignes (34), desquels sont solidaires les roues (28), les roues (28) étant rappelées élastiquement avec les peignes (34) selon une position verticale dépassant des pieds (26) lorsque les peignes (34) sont en position contractée, des patins (90) à faible coefficient de frottement portés par les pieds (26) étant susceptibles de prendre appui sur les glissières (14) pour permettre les déplacements longitudinaux du support (20) quand il coulisse dans les glissières (14), et les roues (28) étant susceptibles d'occuper une portion inclinée lorsque les peignes (34) sont amenés en position expansée et que leurs dents (50) coopèrent avec la crémaillère (74), les patins (90) à faible coefficient de frottement prenant appui sur les glissières (14).

13. Agencement (10) selon l'une quelconque des revendications précédentes, **caractérisé en ce que** les glissières (14) sont montées dans le plancher (12) du véhicule, à la surface duquel elles affleurent.

14. Agencement (10) selon l'une quelconque des revendications précédentes, **caractérisé en ce que** les glissières sont rapportées dans des gouttières (16) de forme complémentaire appartenant au plancher (12) du véhicule et comportent des ailes longitudinales supérieures (15) qui s'étendent transversalement vers l'extérieur des glissières (14) au dessus du plancher (12) du véhicule pour y coincer une moquette (17) du véhicule.

15. Agencement (10) selon l'une quelconque des revendications 3 à 12, **caractérisé en ce que** le support (20) comporte des crochets (21) qui reçoivent des points d'ancrage (23) de l'élément d'aménagement intérieur.

## Patentansprüche

1. Vorrichtung (10) zur Einstellung der Position einer Untereinheit (18) in Längsrichtung und zum Festmachen in der eingestellten Position, insbesondere eines Sitzes (22), eines Kastens (70) oder eines Elements der Inneneinrichtung, auf dem horizontalen Fußbrett (12) des Fahrgastraums eines Kraftfahrzeugs, das mit zwei parallelen Gleitschienen (14) ausgestattet ist, die zur Verschiebung in Längsrichtung einen Mechanismus empfangen, der Bauteile zur Führung der Verschiebung der Untereinheit in Längsrichtung umfasst und mindestens ein Bauteil zur Verriegelung der Untereinheit in der eingestellten Position,
**dadurch gekennzeichnet, dass**
die Bauteile zur Führung Räder (28) aufweisen, mit denen die Untereinheit (18) verschoben werden kann, und dadurch, dass das Bauteil zur Verriegelung, das die Untereinheit (18) trägt, durch einen Kamm (34) gebildet wird, der mit Gelenken um eine Längsachse (44) befestigt ist und der sich erstrecken kann zwischen:
- einem zusammengezogenen Endzustand, in dem seine Querausdehnung die vertikale Einführung des Mechanismus in die Gleitschienen (14) durch einen Längsspalt in deren Mitte und die Verschiebung des Mechanismus in Längsrichtung in den Gleitschienen ermöglicht
- und einem ausgefahrenen Endzustand, in dem es sich im Verhältnis zu den Gleitschienen (14) quer erstreckt, um die Untereinheit (18) im Verhältnis zu den Gleitschienen (14) vertikal in einer Reihe von vorbestimmten Positionen festzustellen und in dem es mit Teilen von seitlichen Oberflächen zusammenwirkt, die mindestens einer der Gleitschienen gegenüber liegen, um die Untereinheit (18) im Verhältnis zu den Gleitschienen (14) in Längsrichtung in diesen vorbestimmten Positionen festzumachen.

2. Vorrichtung (10) gemäß Anspruch 1, **dadurch gekennzeichnet, dass** der Kamm (34), der mit Gelenken um eine von der Untereinheit (18) getragene Längsachse (44) befestigt ist, umfasst:
- einen unteren Teil (48), auf dem Zähne in Querrichtung (50) angeordnet sind, die in ausgefahrenem Zustand mit den Teilen von seitlichen Oberflächen von mindestens einer Gleitschiene (14) zusammenwirken können, wobei der Kamm (34) für jede vorbestimmte Position der Räder (28) einem Teil der seitlichen Oberfläche gegenüberliegt, der der betroffenen vorbestimmten Position zugeordnet ist, und
- einen oberen Teil (56), der die Achse des Gelenks (44) des Kamms (34) umfasst.

3. Vorrichtung (10) gemäß Anspruch 2, **dadurch gekennzeichnet, dass** die Untereinheit (18) einen Träger (20) in Form einer Platte aufweist, dessen seitliche Abmessung mindestens gleich dem Abstand der Gleitschienen (14) ist, der auf seiner Unterseite (24) vier vertikale Füße (26) aufweist, die die Räder (28) tragen, und Füße (46), die die Gelenkachsen (44) der Kämme (34) tragen.

4. Vorrichtung (10) gemäß einem der Ansprüche 2 oder 3, **dadurch gekennzeichnet, dass** die Kämme (34) obere Teile (56) aufweisen, auf denen im Wesentlichen vertikale Stellhebel (60) angebracht sind, und dadurch, dass die Unterseite (24) des Trägers einen Bedienarm (36) aufweist, im Wesentlichen in Längsrechtung und horizontal, dessen vertikale Achse des Gelenks drehbar auf dem Träger (20) befestigt ist und der eine mit der Achse verbundene Nocke (40) aufweist, die in Querrichtung ein Gestänge (42) betätigen kann, das mit einem oberen Ende der Hebel (60) verbunden ist, um die Drehung der Kämme (34) um ihre Gelenkachsen (44) in Gang zu setzen, wobei die Hebel (60) elastisch in eine Position zurückgeholt werden, die der ausgefahrenen Position der Kämme (34) entspricht.

5. Vorrichtung (10) gemäß einem der Ansprüche 2 oder 3, **dadurch gekennzeichnet, dass** die Kämme (34) auf ihren unteren Teilen (48) Oberflächen (76) aufweisen, die die Druckauflage von exzentischen Nocken (78) erlauben, die um Längsachsen (80) drehbar gelagert sind und die die Drehung der Kämme (34) um ihre Gelenkachsen (44) steuern können, wobei die Kämme (34) elastisch in zusammengezogene Position zurückgeholt werden.

6. Vorrichtung (10) gemäß irgend einem der Ansprüche 2 bis 5, **dadurch gekennzeichnet, dass** der Träger (20) in Gelenkverbindung zwei Kämme (34) empfängt, die seitlich in mittlerer Position auf beiden Seiten seiner Unterseite angeordnet sind.

7. Vorrichtung (10) gemäß irgend einem der Ansprüche 2 bis 5, **dadurch gekennzeichnet, dass** der Träger (20) in Gelenkverbindung vier Kämme (34) empfängt, die seitlich zwei und zwei auf beiden Seiten seiner Unterseite angeordnet sind.

8. Vorrichtung (10) gemäß irgend einem der vorhergehenden Ansprüche,
**dadurch gekennzeichnet, dass** mindestens eine Gleitschiene (14) eine Reihe von zu den Rädern (28) komplementären Vertiefungen (32) aufweist, in denen die Räder (28) aufgenommen werden können, um eine Reihe von vorbestimmten Positionen zu erhalten.

9. Vorrichtung (10) gemäß Anspruch 8, **dadurch gekennzeichnet, dass** die Vertiefungen (32) aus dem Material der Gleitschienen (14) realisiert sind.

10. Vorrichtung (10) gemäß Anspruch 8, **dadurch gekennzeichnet, dass** die Vertiefungen (32) von Stäben (72) getragen werden, die im Boden der Gleitschienen (14) eingesetzt sind.

11. Vorrichtung (10) gemäß irgend einem der Ansprüche 1 bis 7, **dadurch gekennzeichnet, dass** mindestens eine Gleitschiene (14) eine innere seitliche Zahnstange (74) aufweist, um die Teile der inneren seitlichen Oberflächen zur erhalten, die das vertikale Festmachen der Füße (26) realisieren, und um die Reihe der vorbestimmten Positionen zu erhalten, die das Festmachen der Füße (26) in Längsrichtung realisiert.

12. Vorrichtung (10) gemäß Anspruch 11 in Kombination mit Anspruch 5, **dadurch gekennzeichnet, dass** die vertikalen Füße (26) des Trägers (20) die Kämme (34) in Gelenkverbindung aufnehmen, mit denen die Räder (28) fest verbunden sind, wobei die Räder (28) zusammen mit den Kämmen (34) elastisch zurückgeholt werden gemäß einer vertikalen Position, die die Füße (26) überragt, wenn die Kämme (34) in zusammengezogener Position sind, wobei sich von den Füßen getragene Gleitkufen (90) mit niedrigem Reibungskoeffizienten auf den Gleitschienen (14) aufstützen können, um die Bewegungen des Trägers (20) in Längsrichtung zu ermöglichen, wenn er in den Gleitschienen (14) gleitet, und wobei die Räder (28) eine geneigte Stellung einnehmen können, wenn die Kämme (34) in ausgefahrene Position gebracht werden und ihre Zähne (50) mit der Zahnstange (74) zusammenwirken, wobei sich die Kufen (90) mit niedrigem Reibungskoeffizienten auf den Gleitschienen (14) aufstützen.

13. Vorrichtung (10) gemäß irgend einem der vorhergehenden Ansprüche, **dadurch gekennzeichnet, dass** die Gleitschienen (14) auf dem Boden (12) des Fahrzeugs montiert sind, in dessen Oberfläche sie eingelassen sind.

14. Vorrichtung (10) gemäß irgend einem der vorhergehenden Ansprüche, **dadurch gekennzeichnet, dass** die Gleitschienen in Rinnen (16) von komplementärer Form eingesetzt sind, die zum Boden (12) des Fahrzeugs gehören und obere Flügel (15) in Längsrichtung aufweisen, die sich in Querrichtung zum Äußeren der Gleitschienen (14) hin über dem Boden des Fahrzeugs erstrecken, um dort einen Textilbelag (17) einzuklemmen.

15. Vorrichtung (10) gemäß irgend einem der Ansprüche 3 bis 12, **dadurch gekennzeichnet, dass** der Träger (20) Haken (21) aufweist, die Verankerungspunkte (23) eines Elements der Inneneinrichtung empfangen.

## Claims

1. An arrangement (10) for adjusting the longitudinal position, and for securing the adjusted position, of a sub-assembly (18), in particular a seat (22), a box (70), or an interior fitting member, on the horizontal floor (12) of the passenger space of an automobile vehicle fitted with two parallel slideways (14) adapted for the longitudinal displacement of a mechanism comprising members for guiding the longitudinal displacements of the sub-assembly and at least one member for locking the sub-assembly in the adjusted position, **characterised in that** the guide members comprise wheels (28) making it possible to displace the sub-assembly (18) and **in that** the locking member borne by the sub-assembly (18) is formed by a comb (34) which is articulated about a longitudinal axis (44) and may be extended between:
- an end contracted state in which its transverse bulk allows the mechanism to be the inserted vertically in the slideways (14) via a median longitudinal slot in the latter, and enables the longitudinal displacement of the mechanism in the slideways,
- an end expanded state in which it extends transversely with respect to the slideways (14), in order vertically to lock the sub-assembly (18) in a series of predetermined positions with respect to the slideways (14), and in which it cooperates with lateral surface portions facing at least one of the slideways in order longitudinally to lock the sub-assembly (18) in these predetermined positions with respect to the slideways (14).

2. An arrangement (10) as claimed in claim 1, **characterised in that** the comb (34), which is articulated about the longitudinal axis (44) borne by the sub-assembly (18), comprises:
- a lower portion (48) on which transverse teeth (50) are disposed and adapted to cooperate, in the expanded state, with the lateral surface portions of at least one of the slideways (14), the comb (34) facing, for each predetermined position of the wheels (28), a lateral surface portion associated with the predetermined position in question, and
- an upper portion (56) which comprises the axis of articulation (44) of the comb (34).

3. An arrangement (10) as claimed in claim 2, **characterised in that** the sub-assembly (18) comprises a support (20) in the form of a plate of a transverse dimension at least equal to the spacing of the slideways (14) which comprises, below its lower surface (24), four vertical feet (26) bearing wheels (28), and lugs (46) bearing the axes of articulation (44) of the combs (34).

4. An arrangement (10) as claimed in any one of claims 2 or 3, **characterised in that** the combs (34) comprise upper portions (56) on which substantially vertical control levers (60) are arranged, and **in that** the lower surface (24) of the support comprises a substantially longitudinal and horizontal control arm (36) whose vertical axis of articulation is mounted to rotate on the support (20) and comprises a cam (40), rigid with the axis, which is adapted transversely to actuate a rod assembly (42) which is connected to an upper end of the levers (60) in order to control the rotation of the combs (34) about their axes of articulation (44), the levers (60) being recalled elastically into a position corresponding to the expanded position of the combs (34).

5. An arrangement (10) as claimed in any one of claims 2 or 3, **characterised in that** the combs (34) comprise, in their lower portions (48), surfaces (76) enabling the support of eccentric cams (78) which are mounted to rotate about longitudinal axes (80) and which are adapted to control the rotation of the combs (34) about their axes of articulation (44), the combs (34) being recalled elastically into the contracted position.

6. An arrangement (10) as claimed in any one of claims 2 to 5, **characterised in that** the support (20) receives in an articulated manner two combs (34) disposed in a median lateral position on either side of its inner surface (24).

7. An arrangement (10) as claimed in any one of claims 2 to 5, **characterised in that** the support (20) receives in an articulated manner four combs (34) disposed laterally two by two on either side of its inner surface (24).

8. An arrangement (10) as claimed in any one of the preceding claims, **characterised in that** at least one slideway (14) comprises a series of slots (32) complementary to the wheels (28) in which the wheels (28) may be received in order to obtain the series of predetermined positions.

9. An arrangement (10) as claimed in claim 8, **characterised in that** the slots (32) are moulded in one piece with the slideways (14).

10. An arrangement (10) as claimed in claim 8, **characterised in that** the slots (32) are borne by bars (72) which are added to the base of the slideways (14).

11. An arrangement (10) as claimed in any one of claims 1 to 7, **characterised in that** at least one slideway (14) comprises an inner lateral rack (74) in order to obtain the inner lateral surface portions via which the feet (26) are vertically locked and to obtain the series of predetermined positions via which the feet (26) are longitudinally locked.

12. An arrangement (10) as claimed in claim 11, taken in conjunction with claim 5, **characterised in that** the vertical feet (26) of the support (20) receive in an articulated manner the combs (34) with which the wheels (28) are rigid, the wheels (28) being recalled elastically with the combs (34) with respect to a vertical position exceeding the feet (26) when the combs (34) are in the contracted position, lugs (90) with a low coefficient of friction borne by the feet (26) being adapted to bear on the slideways (14) to enable the longitudinal displacements of the support (20) when it slides in the slideways (14), and the wheels (28) being adapted to occupy an inclined position when the combs (34) are in the expanded position and their teeth cooperate with the rack (74), the lugs (90) with a low coefficient of friction bearing on the slideways (14).

13. An arrangement (10) as claimed in any one of the preceding claims, **characterised in that** the slideways (14) are mounted in the floor (12) of the vehicle, flush with its surface.

14. An arrangement (10) as claimed in any one of the preceding claims, **characterised in that** the slideways are added to channels (16) of complementary shape belonging to the floor of the vehicle and comprise upper longitudinal flanges (15) which extend transversely towards the exterior of the slideways (14) above the floor (12) of the vehicle in order to clamp a carpet (17) of the vehicle at that point.

15. An arrangement (10) as claimed in any one of claims 3 to 12, **characterised in that** the support (20) comprises hooks (21) which receive anchoring points (23) of the inner fittings member.
